# EUROPÄISCHE PATENTANMELDUNG

(11) **EP 4 098 396 A1**
(43) Veröffentlichungstag der Anmeldung: **07.12.2022**
(21) Anmeldenummer: 22166943.5
(22) Anmeldetag: 06.04.2022
(51) Int. Cl.: B23P 11/00, B21D 39/04, E04B 1/19, E04B 1/58, F16B 7/00, F16L 13/14

(54) **VERFAHREN ZUR FORMSCHLÜSSIGEN VERBINDUNG EINES BUCHSENKÖRPERS MIT EINEM ROHRKÖRPER**

(30) Priorität: 31.05.2021 DE 102021113998
(71) Anmelder: Meleghy Automotive GmbH & Co. KG, 57234 Wilnsdorf (DE)
(72) Erfinder: Werle, Thomas, 51789 Lindlar-Frielingsdorf (DE); Jahn, Joachim, 47495 Rheinberg-Borth (DE)
(74) Vertreter: Kalkoff & Partner Patentanwälte mbB

(57) **Zusammenfassung**

Die Erfindung betrifft ein Verfahren zur formschlüssigen Verbindung eines mindestens zwei vertikal auf einem Buchsenkörperbund angeordnete Vorsprünge aufweisenden Buchsenkörpers, mit einem Rohrkörper mit den Schritten
- Lochen eines Rohrendabschnitts des Rohrkörpers zur Herstellung einer Ausnehmung,
- Ausrichten des Rohrkörpers gegenüber dem Buchsenkörper zur Verbindung mit dem Buchsenkörper und
- Einbringen der vertikalen Vorsprünge des Buchsenkörpers in die Ausnehmung an dem Rohrendabschnitt.

Weiterhin betrifft die Erfindung einen Buchsenkörper mit einem Buchsenkörperbund, einer Buchsenöffnung und an dem Buchsenkörperbund anschließende, senkrecht zu einer Buchsenöffnungsebene ausgerichteten, vertikalen Vorsprüngen. Ferner betrifft die Erfindung einen Rohrkörper mit mindestens einer auf einem gequetschten Rohrendabschnitt angeordneten Ausnehmung. Um ein Verfahren bereitzustellen, dass eine formschlüssige Verbindung eines Buchsenkörpers mit einem Rohrkörper mit besonders hoher Stabilität und Festigkeit ermöglicht, ist vorgesehen, dass der Rohrendabschnitt derart gelocht wird, dass der Buchsenkörper verdrehfest in der Ausnehmung aufgenommen wird. Weiter ist um einen Buchsenkörper bereitzustellen, der einfach und zuverlässig mit einem Rohrkörper verbindbar ist, vorgesehen, dass die vertikalen Vorsprünge zur verdrehfesten Aufnahme des Buchsenkörpers an einem gequetschten Rohrendabschnitt eines Rohrkörpers ausgebildet sind. Ferner ist um einen Rohrkörper bereitzustellen, der sicher und einfach eine für eine kraftschlüssige Verbindung notwendige Anschraubfläche ermöglicht, vorgesehen, dass in der Ausnehmung vertikale Vorsprünge eines Buchsenkörpers verdrehfest angeordnet sind und der Buchsenkörper mit einem Buchsenkörperbund an dem gequetschten Rohrendabschnitt anliegt.

## Beschreibung

Die Erfindung betrifft ein Verfahren zur formschlüssigen Verbindung eines mindestens zwei vertikal auf einem Buchsenkörperbund angeordnete Vorsprünge aufweisenden Buchsenkörpers, mit einem Rohrkörper mit den Schritten
- Lochen eines Rohrendabschnitts des Rohrkörpers zur Herstellung einer Ausnehmung,
- Ausrichten des Rohrkörpers gegenüber dem Buchsenkörper zur Verbindung mit dem Buchsenkörper und
- Einbringen der vertikalen Vorsprünge des Buchsenkörpers in die Ausnehmung an dem Rohrendabschnitt.

Weiterhin betrifft die Erfindung einen Buchsenkörper mit einem Buchsenkörperbund, einer Buchsenöffnung und an dem Buchsenkörperbund anschließende, senkrecht zu einer Buchsenöffnungsebene ausgerichteten, vertikalen Vorsprüngen. Ferner betrifft die Erfindung einen Rohrkörper mit mindestens einer auf einem gequetschten Rohrendabschnitt angeordneten Ausnehmung.

Verfahren der eingangs genannten Art werden dazu benutzt, um eine formschlüssige Verbindung zwischen einem Buchsenkörper und einem Rohrkörper herzustellen und den Nachteilen einer stoffschlüssigen Verbindung, beispielsweise einer Schweißverbindung entgegenzuwirken.

Zur Herstellung einer formschlüssigen Verbindung weist der Rohrkörper oder der Buchenkörper üblicherweise vertikale Vorsprünge auf, die in eine Ausnehmung auf dem Buchsenkörper oder dem Rohrkörper eingebracht werden. Hierzu wird die Ausnehmung, z.B. mit einem zerspanenden Fertigungsverfahren ausgebildet. Anschließend werden die vertikalen Vorsprünge in die Ausnehmung eingebracht, sodass der Rohrkörper und der Buchsenkörper eine formschlüssige Verbindung bilden. Die Stabilität und Festigkeit der formschlüssigen Verbindung sind besonders von der Art und der konstruktiven Gestaltung der vertikalen Vorsprünge und der Ausnehmung abhängig. Die konstruktiven Gestaltungen der Ausnehmung und der vertikalen Vorsprünge sind derzeit nicht optimal aufeinander abgestimmt. Bereits kleine Abweichungen der konstruktiven Gestaltungen der Ausnehmung und der vertikalen Vorsprünge führen zu einer mangelnden Festigkeit und Stabilität der Verbindung zwischen Rohrkörper und Buchsenkörper.

Der Erfindung liegt die Aufgabe zugrunde, ein Verfahren bereitzustellen, dass eine formschlüssige Verbindung eines Buchsenkörpers mit einem Rohrkörper mit besonders hoher Stabilität und Festigkeit ermöglicht. Weiterhin liegt der Erfindung die Aufgabe zugrunde, einen Buchsenkörper bereitzustellen, der einfach und zuverlässig mit einem Rohrkörper verbindbar ist. Ferner liegt der Erfindung die Aufgabe zugrunde, einen Rohrkörper bereitzustellen, der sicher und einfach eine für eine kraftschlüssige Verbindung notwendige Anschraubfläche ermöglicht.

Die Erfindung löst die Aufgabe durch ein Verfahren mit den Merkmalen des Anspruchs 1 sowie einen Buchsenkörper mit den Merkmalen des Anspruchs 8 und einen Rohrkörper mit den Merkmalen des Anspruchs 13. Vorteilhafte Weiterbildungen der Erfindung sind in den abhängigen Ansprüchen angegeben.

Kennzeichnend für das erfindungsgemäße Verfahren ist, dass der Rohrendabschnitt derart gelocht wird, dass der Buchsenkörper verdrehfest in der Ausnehmung aufgenommen wird.

Ein Buchsenkörper, beispielsweise eine Buchse, ist üblicherweise zylinderartig ausgebildet und kann aus jedem beliebigen Material, z.B. aus einem Aluminiumwerkstoff oder einem Stahlwerkstoff gebildet sein. Der Buchsenkörper weist zwei Buchsenkörperstirnflächen auf, die als eine Grundfläche und ein parallel zur Grundfläche angeordneter Buchsenkörperbund ausgebildet sind. Vorzugsweise sind die Grundfläche und der Buchsenkörperbund deckungsgleich ausgebildet. Auf dem Buchsenkörperbund sind mindestens zwei vertikale Vorsprünge angeordnet. Unter einer vertikalen Anordnung der Vorsprünge wird dabei im Rahmen der Erfindung eine Ausrichtung der Vorsprünge verstanden, bei der diese sich in eine von dem Buchsenkörper abgewandte Richtung in einem spitzen Winkel, bevorzugt in einem rechten Winkel zum Buchsenkörperbund erstrecken. Die vertikalen Vorsprünge sind in beliebiger Form, z.B. zylinderartig mit einem kreisförmigen oder polygonartigen Querschnitt ausgebildet. Ferner sind die vertikalen Vorsprünge bevorzugt einstückig mit dem Buchsenkörper ausgebildet.

Ein Rohrkörper ist z.B. ein Rohr oder eine hohle Strebe, die im Bereich ihrer gegenüberliegenden Enden jeweils einen Rohrendabschnitt aufweisen. Üblicherweise weist der Rohrkörper eine Rohrkörperwand auf, die durch den Innendurchmesser und den Außendurchmesser des Rohrkörpers definiert ist. Der Rohrendabschnitt beschreibt einen Abschnitt des Rohrkörpers, der sich entlang der Längsachse des Rohrkörpers von einer ersten Rohrkörperstirnfläche in Richtung einer zweiten Rohrkörperstirnfläche oder umgekehrt erstreckt und innerhalb dem der Buchsenkörper am Rohrkörper anliegt. Rohrkörperstirnflächen beschreiben ferner die abschließenden Querschnittsflächen an den Enden des Rohrkörpers, bzw. eines Rohrendabschnitts.

Der Rohrendabschnitt des Rohrkörpers wird zur Herstellung der Ausnehmung beispielsweise eines freien Bereichs der Rohrkörperwand am Rohrendabschnitt gelocht, wobei der Begriff Lochen jedes denkbare Verfahren zur Herstellung der Ausnehmung, wie z.B. Bohren, Fräsen oder Laserschneiden umfasst. Die Ausnehmung weist vorzugsweise durch das Lochen zwei an die vertikalen Vorsprünge angepasste erste freie Abschnitte und bevorzugt einen sich zwischen den beiden ersten freien Abschnitten erstreckenden zweiten freien Abschnitt auf, der besonders bevorzugt an die Form des Buchsenkörperbundes angepasst ist.

Der Rohrkörper wird gegenüber dem Buchsenkörper zur Verbindung mit dem Buchsenkörper ausgerichtet, z.B. manuell oder maschinell. Hierbei wird der Rohrkörper derart gedreht und positioniert, dass die Ausnehmung zur Einbringung der vertikalen Vorsprünge des Buchsenkörpers in die Ausnehmung ausgerichtet ist. Vorzugsweise wird der Rohrkörper zur Verbindung mit dem Buchsenkörper derart gegenüber diesem ausgerichtet, dass die Ausnehmung parallel zum Buchsenkörperbund des Buchsenkörpers und auf die Richtung der vertikalen Vorsprünge ausgerichtet ist. Der Buchsenkörperbund beschreibt demnach die dem Rohrkörper zugewandte Buchsenkörperstirnfläche und kann an dem Rohrkörper anliegen.

Die vertikalen Vorsprünge des Buchsenkörpers werden in die Ausnehmung an dem Rohrendabschnitt des ausgerichteten Rohrkörpers eingebracht, z.B. in einer zum Rohrendabschnitt senkrechten Bewegungsrichtung auf diesen zubewegt und in die Ausnehmung eingepresst. Folglich wird der Rohrendabschnitt z.B. derart gelocht, dass die Ausnehmung eine an die vertikalen Vorsprünge, bspw. an den Querschnitt der vertikalen Vorsprünge, angepasste Kontur aufweist, die insbesondere derart ausgebildet ist, dass die vertikalen Vorsprünge in die Ausnehmung eingepresst werden. Durch die verdrehfeste Aufnahme in der Ausnehmung kann der Buchsenkörper nicht mehr verdreht werden.

Die vertikalen Vorsprünge werden zuverlässig und auf die Ausnehmung ausgerichtet in diese eingebracht und der Buchsenkörper wird verdrehfest an der Ausnehmung aufgenommen. Hierdurch wird auf vorteilhafte Weise eine formschlüssige Verbindung mit hoher Steifigkeit und Festigkeit ermöglicht und einer strukturellen Schwächung des Rohrkörpers und des Buchsenkörpers, die durch eine stoffschlüssige Verbindung, z.B. eine Schweißverbindung resultieren würde, entgegengewirkt. Ferner werden durch das Entfallen einer Schweißverbindung die Herstellungskosten und der Aufwand einer Qualitätssicherung verringert.

Die Ausnehmungen an den Rohrendabschnitten eines Rohrkörpers können nacheinander hergestellt werden. Nach einer vorteilhaften Weiterbildung der Erfindung ist jedoch vorgesehen, dass an zwei sich gegenüberliegenden Rohrendabschnitten zeitgleich Ausnehmungen hergestellt und anschließend jeweils die vertikalen Vorsprünge eines Buchsenkörpers eingebracht werden. Der Rohrkörper, z.B. ein Rohr oder eine hohle Strebe, weist üblicherweise zwei gegenüberliegende Rohrendabschnitte auf. Alternativ sind auch zwei Rohrendabschnitte unterschiedlicher Rohrkörper möglich. Die beiden Rohrendabschnitte werden zeitgleich zur Herstellung jeweils einer Ausnehmung gelocht, z.B. gebohrt, gefräst oder mittels Laserschneiden bearbeitet. Anschließend erfolgt zeitgleich jeweils das Einbringen der vertikalen Vorsprünge eines Buchsenkörpers in eine Ausnehmung auf einem der Rohrendabschnitte. Dadurch wird auf vorteilhafte Weise ermöglicht, dass ein Rohrkörper effizient und schnell mit zwei Buchsenkörpern verbunden werden kann.

Nach einer vorteilhaften Weiterbildung der Erfindung ist vorgesehen, dass der Rohrendabschnitt vor dem Lochen gequetscht wird. Der Rohrendabschnitt wird z.B. über bekannte Umformvorrichtungen, beispielsweise eine Rohrpresse gequetscht. Quetschen bezeichnet hierbei das Zusammenpressen des Rohrkörpers im Bereich des Rohrendabschnitts. Durch das Quetschen des Rohrendabschnitts wird auf vorteilhafte Weise gewährleistet, dass der Buchsenkörper besonders großflächig an dem Rohrendabschnitt anliegt und der Rohrendabschnitt einfacher und mit einer besonders hohen Vielzahl an Verfahren gelocht werden kann. Ebenso wird in vorteilhafter Weise ermöglicht, dass der Rohrkörper besonders zuverlässig mit der Ausnehmung auf die vertikalen Vorsprünge ausgerichtet werden kann.

Die vertikalen Vorsprünge können grundsätzlich innerhalb einer frei wählbaren Zeit eingebracht werden. Nach einer vorteilhaften Ausgestaltung der Erfindung ist jedoch vorgesehen, dass die vertikalen Vorsprünge innerhalb von bis zu 6 Sekunden, bevorzugt bis zu 5 Sekunden, besonders bevorzugt bis zu 4 Sekunden eingebracht werden. Das bedeutet z.B. für den Fall, dass an zwei gegenüberliegenden Rohrendabschnitten zeitgleich Ausnehmungen hergestellt werden, dass innerhalb von bis zu 6 Sekunden, bevorzugt bis zu 5 Sekunden, besonders bevorzugt bis zu 4 Sekunden, die Rohrendabschnitte gelocht, der Rohrkörper ausgerichtet und die vertikalen Vorsprünge eines Buchsenkörpers jeweils in eine Ausnehmung zur verdrehfesten Aufnahme der Buchsenkörper eingebracht werden. Dadurch können auf vorteilhafte Weise zwei Buchsenkörpern effizient und schnell formschlüssig an dem Rohrkörper befestigt werden.

Nach einer vorteilhaften Weiterbildung der Erfindung ist vorgesehen, dass die eingebrachten vertikalen Vorsprünge durch einen dornartigen Stanzkörper innerhalb der Ausnehmung an dem Rohrendabschnitt nietartig aufgeweitet werden. Ein dornartiger Stanzkörper, beispielsweise ein Stanzdorn, weist eine einstückig mit einem zylinderartigen Grundkörper ausgebildete Spitze auf, die ferner derart ausgebildet ist, dass sie an die Form und Größe des Querschnitts eines vertikalen Vorsprungs angepasst ist. Die vertikalen Vorsprünge des Buchsenkörpers werden wie bereits erläutert in die Ausnehmung auf dem Rohrendabschnitt eingebracht. Anschließend wird nun der dornartige Stanzkörper mit der Spitze auf der dem Buchsenkörper abgewandten Seite des Rohrendabschnitts in einen vertikalen Vorsprung eingedrückt und der vertikale Vorsprung weitet sich innerhalb der Ausnehmung nietartig auf. Nietartig bedeutet hierbei, dass die vertikalen Vorsprünge durch den dornartigen Stanzkörper derart plastisch verformt werden, dass sich der Querschnitt der vertikalen Vorsprünge vergrößert. Der dornartige Stanzkörper kann j e nach Material des Buchsenkörpers manuell bewegt werden, bevorzugt ist der Stanzkörper jedoch maschinell angetrieben, um eine höhere Kraft auf einen vertikalen Vorsprung ausüben zu können. Ferner werden vorzugsweise mehrere vertikale Vorsprünge, z.B. zwei vertikale Vorsprünge zeitgleich mit jeweils einem dornartigen Stanzkörper innerhalb der Ausnehmung an dem Rohrendabschnitt nietartig aufgeweitet. Das nietartige Aufweiten der vertikalen Vorsprünge ermöglicht auf vorteilhafte Weise, dass die formschlüssige Verbindung zwischen Rohrkörper und Buchsenkörper besonders hohe Ausdruckkräfte aushält.

Der dornartige Stanzkörper kann in beliebiger Weise in einen vertikalen Vorsprung eingedrückt werden. Nach einer besonders vorteilhaften Weiterbildung der Erfindung ist jedoch vorgesehen, dass der dornartige Stanzkörper jeweils axial zu der Längsachse eines vertikalen Vorsprungs bewegt wird. Der dornartige Stanzkörper wird mit seiner einstückig mit dem Grundkörper ausgebildeten Spitze axial zur Längsachse eines vertikalen Vorsprungs bewegt und bevorzugt an einer auf der Längsachse des vertikalen Vorsprungs angeordneten Position in diesen eingedrückt. Dadurch wird der vertikale Vorsprung in der Ausnehmung auf dem Rohrendabschnitt gleichmäßig aufgeweitet und es kann auf besonders vorteilhafte Weise eine besonders hohe Festigkeit der formschlüssigen Verbindung zwischen dem Rohrkörper und dem Buchsenkörper erzielt werden.

Die Rohrendabschnitte können derart gelocht werden, dass die Ausnehmungen die Rohrkörperwand des Rohrkörpers an den Rohrendabschnitten beispielsweise einfach durchdringen. Nach einer äußerst vorteilhaften Weiterbildung der Erfindung ist jedoch vorgesehen, dass die Rohrendabschnitte derart gelocht werden, dass die Ausnehmungen als die Rohrendabschnitte durchdringende Öffnungen ausgebildet sind. Die Rohrendabschnitte werden wie beschrieben gelocht, sodass die Ausnehmungen die Rohrkörperwand zweifach durchdringen. Dadurch bilden die Ausnehmungen die Rohrendabschnitte durchdringende Öffnungen und die vertikalen Vorsprünge werden bevorzugt vollständig in den Ausnehmungen aufgenommen. Hierdurch kann auf äußerst vorteilhafte Weise einem Verdrehen des an einem Rohrendabschnitt anliegenden Buchsenkörpers vorgebeugt und eine formschlüssige Verbindung äußerst hoher Steifigkeit ermöglicht werden.

Kennzeichnend für den erfindungsgemäßen Buchsenkörper ist, dass die vertikalen Vorsprünge zur verdrehfesten Aufnahme des Buchsenkörpers an einem gequetschten Rohrendabschnitt eines Rohrkörpers ausgebildet sind.

Der Buchsenkörper ist z.B. als zylinderartige Buchse ausgebildet und kann aus jedem beliebigen Material, beispielsweise einem Stahlwerkstoff oder einem Aluminiumwerkstoff gebildet sein. Der Buchsenkörper weist zwei parallel zueinander angeordnete Buchsenkörperstirnflächen auf, die als Grundfläche und Buchsenkörperbund ausgebildet sind. Der Buchsenkörperbund ist vorzugsweise deckungsgleich zur Grundfläche ausgebildet. Auf dem Buchsenkörperbund ist in einer Buchsenöffnungsebene eine Buchsenöffnung angeordnet. Die Buchsenöffnung erstreckt sich derart vom Buchsenkörperbund bis zur Grundfläche des Buchsenkörpers, dass ein den Buchsenkörper durchdringender freier Bereich gebildet ist. Ferner weist der Buchsenkörper mindestens zwei vertikale Vorsprünge auf, die auf dem Buchsenkörperbund angeordnet sind und in beliebiger Form, beispielsweise zylinderartig mit einem polygonartigen oder kreisförmigen Querschnitt gebildet sind. Die vertikalen Vorsprünge sind bevorzugt einstückig mit dem Buchsenkörper ausgebildet und schließen an den Buchsenkörperbund an. Die Form und Größe der vertikalen Vorsprünge ist an die Kontur einer Ausnehmung auf dem gequetschten Rohrendabschnitt des Rohrkörpers, z.B. eines Rohres oder einer hohlen Strebe, angepasst. Beispielsweise weisen die vertikalen Vorsprünge eine Außenkontur auf, die mindestens in der Buchsenöffnungsebene eine größere Querschnittsfläche aufweist als die Kontur der Ausnehmung. Eine größere Querschnittsfläche resultiert z.B. durch einen größeren Durchmesser. Dadurch sind die vertikalen Vorsprünge in die Ausnehmung einbringbar, sodass eine verdrehfeste Aufnahme des Buchsenkörpers an dem gequetschten Rohrendabschnitt ermöglicht wird.

Die Buchsenöffnung kann beliebig auf dem Buchsenkörperbund angeordnet sein. Nach einer vorteilhaften Ausgestaltung des Buchsenkörpers ist jedoch vorgesehen, dass die Buchsenöffnung koaxial zu einer senkrecht zur Buchsenöffnungsebene verlaufenden Längsachse des Buchsenkörpers angeordnet ist. Die Buchsenöffnung ist folglich zentral auf dem Buchsenkörperbund angeordnet und erstreckt sich entlang der Längsachse des Buchsenkörpers bis zur Grundfläche des Buchsenkörpers. Durch die vorteilhafte Ausgestaltung des Buchsenkörpers kann gewährleistet werden, dass die Buchsenöffnung bei einer formschlüssigen Verbindung des Buchsenkörpers mit dem Rohrkörper deckungsgleich über dem zweiten freien Abschnitt der Ausnehmung des Rohrkörpers angeordnet ist und ein Verbindungselement z.B. ein Stift oder eine Schraube einfach und zuverlässig den Buchsenkörper und den Rohrkörper durchdringend und parallel zur Längsachse des Buchsenkörpers innerhalb der Buchsenöffnung und der Ausnehmung anordbar ist.

Die Buchsenöffnung kann in jeder beliebigen Form, z.B. kreisartig oder polygonartig ausgebildet sein. Nach einer vorteilhaften Weiterbildung des Buchsenkörpers ist jedoch vorgesehen, dass die Buchsenöffnung ellipsenartig und konzentrisch zum Buchsenkörperbund ausgebildet ist. Folglich weist die Buchsenöffnung eine ellipsenartige Querschnittsfläche auf, die konzentrisch zum Buchsenkörperbund angeordnet ist. Dadurch weist der Buchsenkörper ebenfalls eine ellipsenartige Querschnittsfläche, bzw. einen ellipsenartig ausgebildeten Buchsenkörperbund auf. Hiermit können die Herstellungskosten des Buchsenkörpers auf vorteilhafte Weise reduziert werden.

Nach einer besonders vorteilhaften Weiterbildung des Buchsenkörpers ist vorgesehen, dass die vertikalen Vorsprünge parallel zur Längsachse und gegenüberliegend an der dem Buchsenkörperbund auf einer senkrecht zur Längsachse verlaufenden, sich in der Buchsenöffnungsebene erstreckenden Hauptachse der Buchsenöffnung angeordnet sind. Eine Ellipse weist üblicherweise eine längere Hauptachse und eine senkrecht zu dieser angeordnete, kürzere Nebenachse auf. Die Hauptachse der ellipsenartig ausgebildeten Buchsenöffnung erstreckt sich in der Buchenöffnungsebene und ist sowohl senkrecht zur Nebenachse als auch senkrecht zur Längsachse des Buchsenkörpers angeordnet. Bevorzugt ist der Schnittpunkt der Hauptachse und der Nebenachse auf der Längsachse des Buchsenkörpers angeordnet. Auf der Hauptachse sind zwei vertikale Vorsprünge vorzugsweise derart gegenüberliegend angeordnet, dass die Außenkontur der vertikalen Vorsprünge jeweils an die Buchsenöffnung angrenzt. Vorzugsweise sind die vertikalen Vorsprünge jeweils mit dem Mittelpunkt ihrer Querschnittsfläche, z.B. einer kreisrunden Querschnittsfläche, auf der Hauptachse angeordnet. Diese Anordnung der vertikalen Vorsprünge ermöglicht eine besonders hohe Steifigkeit des Buchsenkörpers.

Die Außenkontur der vertikalen Vorsprünge kann in beliebiger Form, bspw. mit einem polygonartigen Querschnitt ausgebildet sein. Nach einer äußerst vorteilhaften Weiterbildung des Buchsenkörpers ist jedoch vorgesehen, dass die vertikalen Vorsprünge eine zylindrisch und/oder konisch ausgebildete Außenkontur aufweisen. Die Außenkontur beschreibt die Mantelfläche der zylindrisch ausgebildeten vertikalen Vorsprünge. Eine konisch ausgebildete Außenkontur nimmt in eine von dem Buchsenkörper abgewandte Richtung stetig ab. Die zylindrisch und/oder konisch ausgebildete Außenkontur gewährleistet, dass die vertikalen Vorsprünge mit einer höheren Einpresskraft in die Ausnehmung auf dem Rohrendabschnitt einpressbar sind, wodurch eine formschlüssige Verbindung zwischen dem Buchsenkörper und dem Rohrkörper besonders hohen Auspresskräften standhält.

Kennzeichnend für den erfindungsgemäßen Rohrkörper ist, dass in der Ausnehmung vertikale Vorsprünge eines Buchsenkörpers verdrehfest angeordnet sind und der Buchsenkörper mit einem Buchsenkörperbund an dem gequetschten Rohrendabschnitt anliegt.

Ein Rohrkörper ist z.B. ein Rohr oder eine hohle Strebe, die im Bereich ihrer gegenüberliegenden Enden jeweils einen gequetschten Rohrendabschnitt aufweisen. Üblicherweise weist der Rohrkörper eine Rohrkörperwand auf, die durch den Innendurchmesser und den Außendurchmesser des Rohrkörpers definiert ist. Ein gequetschter Rohrendabschnitt ist als flächiger Abschnitt an einem Ende des Rohrkörpers ausgebildet. Die Ausnehmung ist vorzugsweise auf dem Rohrendabschnitt angeordnet und erstreckt sich vorzugsweise entlang der Längsachse des Rohrkörpers zwischen zwei zur Rohrkörperstirnfläche beabstandet angeordneten Positionen. Rohrkörperstirnflächen beschreiben hierbei die abschließenden Querschnittsflächen an den Enden des Rohrkörpers, bzw. eines Rohrendabschnitts. An den beiden Positionen sind in der Ausnehmung vertikale Vorsprünge eines Buchsenkörpers verdrehfest angeordnet. Die Ausnehmung weist hierzu an den beiden Positionen jeweils einen ersten freien Abschnitt auf, der jeweils an die Außenkontur und den Querschnitt der vertikalen Vorsprünge angepasst ausgebildet ist. Die beiden Positionen der Ausnehmung sind bevorzugt zueinander in gleicher Weise beabstandet angeordnet, wie die an dem Buchsenkörper angeordneten vertikalen Vorsprünge. Zwischen den beiden ersten freien Abschnitten weist die Ausnehmung einen zweiten freien Abschnitt auf, der an die Form des Buchsenkörpers angepasst ist und vorzugsweise ellipsenartig ausgebildet ist. Der Buchsenkörper ist derart mit den vertikalen Vorsprüngen verdrehfest in der Ausnehmung angeordnet, dass der Buchsenkörperbund an dem gequetschten Rohrendabschnitt anliegt.

Durch die erfindungsgemäße Gestaltung des Rohrkörpers wird eine formschlüssige Verbindung mit einem Buchsenkörper ermöglicht und gewährleistet, dass für die Befestigung des Rohrkörpers an einer anderen Komponente, z.B. einem weiteren Rohrkörper, eine zur Übertragung der Schraubenkraft nötige Anschraubfläche erhalten bleibt. Darüber hinaus kann dies ohne eine stoffschlüssige Verbindung, z.B. eine Schweißverbindung, ermöglicht werden, wodurch äußerst vorteilhaft einer strukturellen Schwächung des Rohrkörpers entgegengewirkt werden kann. Ferner können die Herstellungskosten des Rohrkörpers und der Aufwand der Qualitätssicherung reduziert werden.

Ein Baukastensystem, welches in komfortabler Weise die Herstellung verschiedener Rohrkörper und Buchsenkörper ermöglicht, besteht beispielsweise aus verschiedenen Rohrkörpern und unterschiedlich ausgebildeten Buchsenkörpern. Das Baukastensystem kann z.B. einen Rohrkörper und drei unterschiedlich ausgebildete Buchsenkörper aufweisen. Ebenso kann ein Baukastensystem lediglich mehrere, z.B. drei, unterschiedlich ausgebildete Buchsenkörper aufweisen. Die Buchsenkörper können z.B. unterschiedliche Größen oder verschiedenartig ausgebildete vertikale Vorsprünge aufweisen. Verschiedene Rohrkörper unterscheiden sich z.B. durch unterschiedlich ausgebildete Querschnittsflächen, Größen oder Längen. Ebenso sind für verschiedene Rohrkörper unterschiedliche Rohrendabschnitte möglich, die sich z.B. in unterschiedlichen Längen entlang der Längsachse des Rohrkörpers erstrecken.

Das Verfahren zur formschlüssigen Verbindung des Rohrkörpers mit dem Buchsenkörper kann als "MIMEC connect" bezeichnet werden und erfolgt in einem als "MIMEC tool" bezeichneten Werkzeugkonzept.

Ein Ausführungsbeispiel der Erfindung wird nachstehend mit Bezug auf die Zeichnungen erläutert. In den Zeichnungen zeigen
- Fig. 1: eine schematische Darstellung eines Verfahrens zur formschlüssigen Verbindung eines Buchsenkörpers mit einem Rohrkörper;

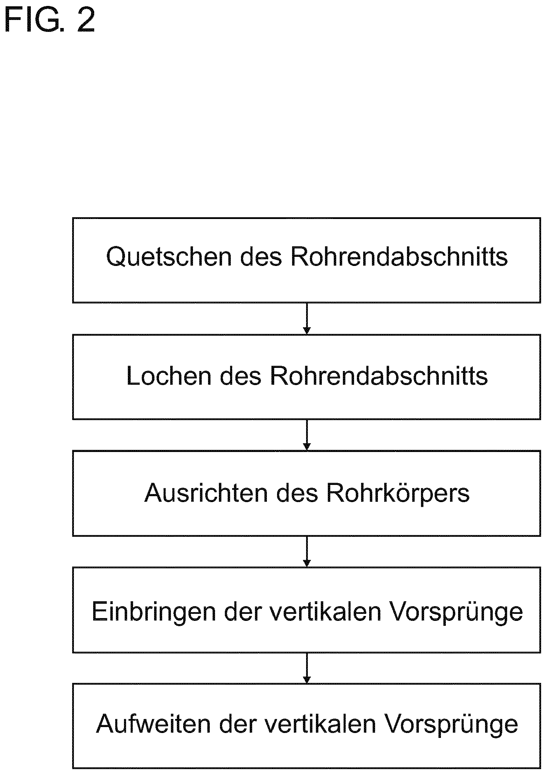

- Fig. 2: ein schematisches Ablaufdiagramm des Verfahrens von Fig. 1;
- Fig. 3a: eine perspektivische Ansicht einer ersten beispielhaften Ausführungsform eines Buchsenkörpers;
- Fig. 3b: eine perspektivische Ansicht einer zweiten beispielhaften Ausführungsform eines Buchsenkörpers;
- Fig. 3c: eine perspektivische Ansicht einer dritten beispielhaften Ausführungsform eines Buchsenkörpers und

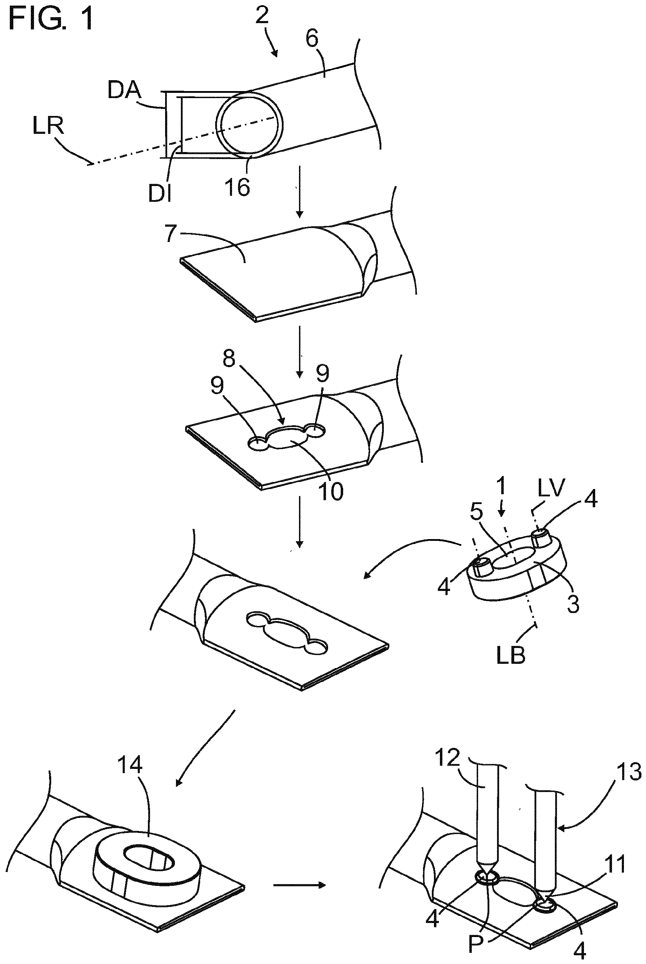

In Fig. 1 ist eine schematische Darstellung eines Verfahrens zur formschlüssigen Verbindung eines Buchsenkörpers 1 mit einem Rohrkörper 2 dargestellt. Der Buchsenkörper 1 weist zwei vertikale auf einem Buchsenkörperbund 3 angeordnete Vorsprünge 4 und eine Buchsenöffnung 5 auf.

Der Rohrkörper 2 weist eine durch einen Innendurchmesser DI und einen Außendurchmesser DA definierte Rohrkörperwand 6 und im Bereich seiner gegenüberliegenden Enden jeweils einen Rohrendabschnitt 7 auf.

Der Rohrkörper 2 wird an dem Rohrendabschnitt 7 mit einer Rohrpressmaschine (nicht dargestellt) gequetscht und zur Herstellung einer Ausnehmung 8 wird der gequetschte Rohrendabschnitt 7 gelocht. Die Ausnehmung 8 weist durch das Lochen zwei an die vertikalen Vorsprünge 4 angepasste erste freie Abschnitte 9 und einen sich zwischen den beiden ersten freien Abschnitten 9 erstreckenden, an die Buchsenöffnung 5 angepassten, zweiten freien Abschnitt 10 auf. Anschließend wird der Rohrkörper 2 gegenüber dem Buchsenkörper 1 zur Verbindung mit dem Buchsenkörper 1 maschinell ausgerichtet. Hierbei wird der Rohrkörper 2 derart gedreht und positioniert, dass die Ausnehmung 8 parallel zum Buchsenkörperbund 3 des Buchsenkörpers 1 ausgerichtet ist. Das bedeutet, dass die beiden ersten freien Abschnitte 9 der Ausnehmung 8 konzentrisch zu den vertikalen Vorsprüngen 4 und der zweite freie Abschnitt 10 deckungsgleich zu der Buchsenöffnung 5 angeordnet sind. Die vertikalen Vorsprünge 4 des Buchsenkörpers 1 werden in die Ausnehmung 8, insbesondere in die beiden ersten freien Abschnitte 9 der Ausnehmung 8 eingebracht. Hierbei wird der Buchsenkörper 1 mit den vertikalen Vorsprüngen 4 in einer zum Rohrendabschnitt 7 senkrechten Bewegungsrichtung auf diesen zubewegt. Die vertikalen Vorsprünge 4 werden vollständig in der Ausnehmung 8 aufgenommen, sodass der Buchsenkörperbund 3 auf dem Rohrkörper 2 anliegt. Abschließend werden die eingebrachten vertikalen Vorsprünge 4 durch einen eine Spitze 11 und einen einstückig mit der Spitze 11 ausgebildeten Grundkörper 12 aufweisenden, dornartigen Stanzkörper 13 innerhalb der Ausnehmung 8 an dem Rohrendabschnitt 7 aufgeweitet. Bei diesem Schritt werden zwei dornartige Stanzkörper 13 jeweils zeitgleich axial zur Längsachse LV eines vertikalen Vorsprungs 4 bewegt undjeweils mit der Spitze 11 in eine Position P auf der Längsachse LV des jeweiligen vertikalen Vorsprungs 4 in diesen eingedrückt. Dadurch werden die vertikalen Vorsprünge 4 plastisch verformt und weiten sich jeweils nietartig auf.

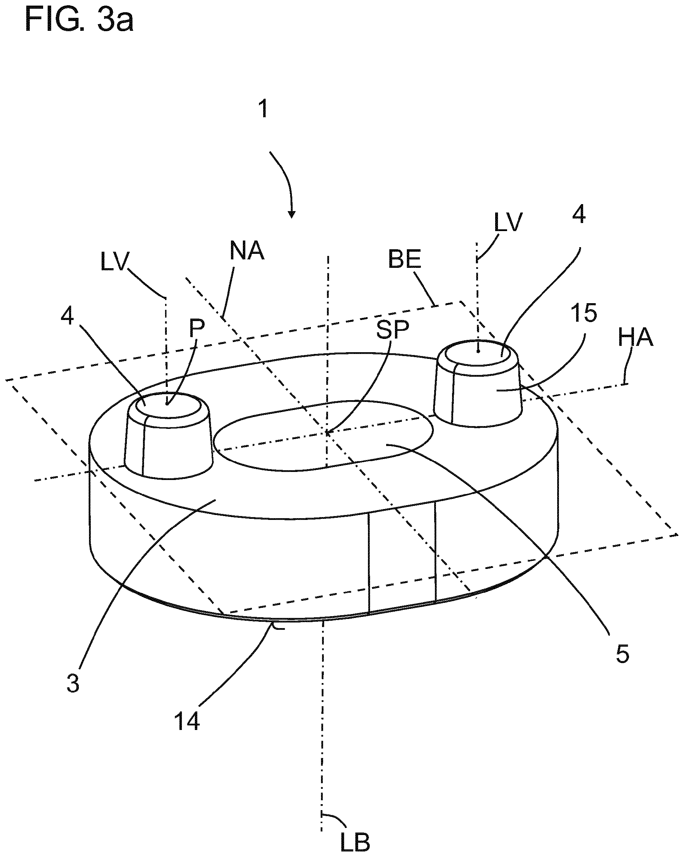

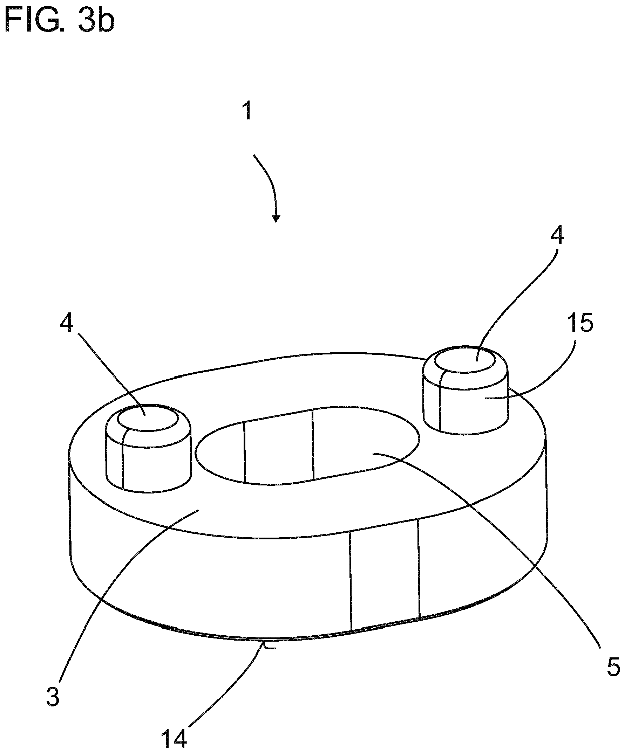

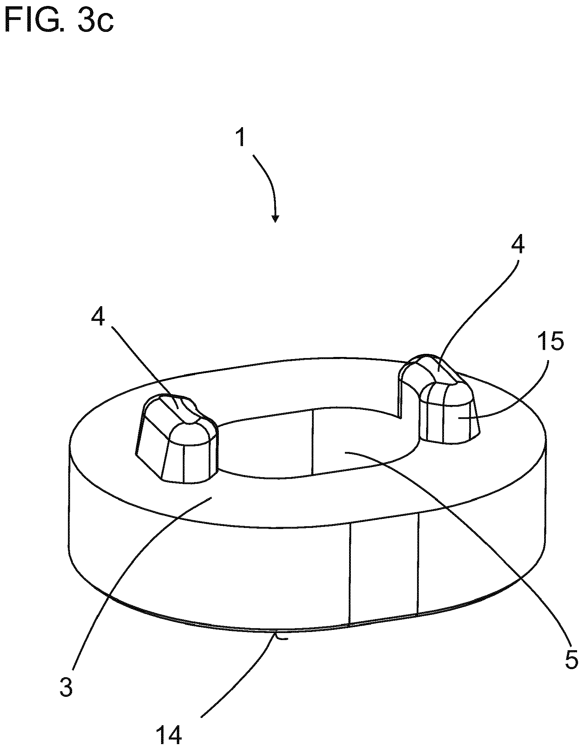

In Fig. 3 a-c sind drei unterschiedliche Ausführungsbeispiele eines Buchsenkörpers 1 dargestellt, die sich lediglich in der Gestaltung der vertikalen Vorsprünge 4 unterscheiden.

Der Buchsenkörper 1 ist zylinderartig aus einem Stahlwerkstoff gebildet und weist zwei Buchsenkörperstirnflächen in Form des Buchsenkörperbundes 3 und einer Grundfläche 14 auf. Der Buchsenkörperbund 3 ist parallel und deckungsgleich zur Grundfläche 14 des Buchsenkörpers 1 angeordnet. Auf dem Buchsenkörperbund 3 ist in einer Buchsenöffnungsebene BE die Buchsenöffnung 5 angeordnet, die sich bis zur Grundfläche 14 des Buchsenkörpers 1 erstreckt und folglich auch koaxial zu einer senkrecht zur Buchsenöffnungsebene BE verlaufenden Längsachse LB des Buchsenkörpers 1 angeordnet ist. Die Buchsenöffnung 5 ist ellipsenartig und konzentrisch zum Buchsenkörperbund 3 ausgebildet. Der Buchsenkörper 1 weist daher einen ellipsenartigen Buchsenkörperbund 3 auf. Die Buchsenöffnung 5 weist in der Buchsenöffnungsebene BE eine Hauptachse HA und eine senkrecht zur Hauptachse HA angeordnete Nebenachse NA auf, deren Schnittpunkt SP auf der Längsachse LB des Buchsenkörpers 1 angeordnet ist. Ferner weist der Buchsenkörper 1 die zwei an dem Buchsenkörperbund 3 anschließenden, senkrecht zu der Buchsenöffnungsebene BE ausgerichteten, vertikalen Vorsprünge 4 auf. Die vertikalen Vorsprünge 4 sind darüber hinaus parallel zur Längsachse LB des Buchsenkörpers 1 und gegenüberliegend auf der Hauptachse HA angeordnet, sodass eine Außenkontur 15 eines vertikalen Vorsprungs 4 jeweils an die Buchsenöffnung 16 angrenzt. Die Außenkontur 15 ist sowohl zylindrisch und/oder konisch ausgebildet (vgl. Fig. 3a-c).

Bei dem beschriebenen Verfahren werden zeitgleich zwei sich gegenüberliegende Rohrendabschnitt 7 eines Rohrkörpers mit jeweils einem Buchsenkörper 1 innerhalb von 4 Sekunden verbunden.

Der Rohrkörper 2 weist nach der Verbindung mit den Buchsenkörpern 1 zwei jeweils mit vertikalen Vorsprüngen 4 in der Ausnehmung 8 an einem gequetschten Rohrendabschnitt 7 angeordnete Buchsenkörper 1 auf. Ein Rohrendabschnitt 7 ist ein Bereich des Rohrkörper 2 der sich entlang einer Längsachse LR des Rohrkörpers 2 von einer ersten Rohrkörperstirnfläche 16 in Richtung einer zweiten Rohrkörperstirnfläche (nicht dargestellt) erstreckt und in dem der Buchsenkörper 1 mit dem Buchsenkörperbund 3 am Rohrkörper 2 anliegt.

Ein Baukastensystem weist mindestens einen Rohrkörper 2 und mindestens einen Buchsenkörper 1 der drei beispielhaften Ausführungsformen auf. Dadurch kann je nach Anwendungsfall ein passender Buchsenkörper 1 ausgewählt und mit dem Rohrkörper 2 formschlüssig verbunden werden. Das Verfahren zur Verbindung des Rohrkörpers 2 mit dem Buchsenkörper 1 heißt "MIMEC connect" und erfolgt in einem Werkzeugkonzept mit dem Namen "MIMEC tool".

Durch die formschlüssige Verbindung zwischen dem Rohrkörper 2 und dem Buchsenkörper 1 kann einer strukturellen Schwächung des Rohrkörpers 2 und des Buchsenkörpers 1 durch eine Schweißverbindung vorgebeugt werden. Darüber hinaus kann durch eine an die konstruktive Gestaltung der vertikalen Vorsprünge 4 in besonderer Weise angepasste Ausnehmung 8 eine formschlüssige Verbindung mit besonders hoher Festigkeit und Steifigkeit erlaubt werden, die besonders hohen Auspresskräften standhält.

### Bezeichnungsliste

- 1: Buchsenkörper
- 2: Rohrkörper
- 3: Buchsenkörperbund
- 4: vertikale Vorsprünge
- 5: Buchsenöffnung
- 6: Rohrkörperwand
- 7: Rohrendabschnitt
- 8: Ausnehmung
- 9: erster freier Abschnitt der Ausnehmung
- 10: zweiter freier Abschnitt der Ausnehmung
- 11: Spitze des dornartigen Stanzkörpers
- 12: Grundkörper des dornartigen Stanzkörpers
- 13: dornartiger Stanzkörper
- 14: Grundfläche des Buchsenkörpers
- 15: Außenkontur eines vertikalen Vorsprungs
- 16: erste Rohrkörperstirnfläche
- BE: Buchsenöffnungsebene
- DI: Innendurchmesser des Rohrkörpers
- DA: Außendurchmesser des Rohrkörpers
- HA: Hauptachse der Buchsenöffnung
- LB: Längsachse des Buchsenkörpers
- LR: Längsachse des Rohrkörpers
- LV: Längsachse eines vertikalen Vorsprungs
- NA: Nebenachse der Buchsenöffnung
- P: Position zum Eindrücken des dornartigen Stanzkörpers
- SP: Schnittpunkt der Hauptachse und der Nebenachse

## Patentansprüche

1. Verfahren zur formschlüssigen Verbindung eines mindestens zwei vertikale auf einem Buchsenkörperbund (3) angeordnete Vorsprünge (4) aufweisenden Buchsenkörpers (1), mit einem Rohrkörper (2) mit den Schritten
- Lochen eines Rohrendabschnitts (7) des Rohrkörpers (2) zur Herstellung einer Ausnehmung (8),
- Ausrichten des Rohrkörpers (2) gegenüber dem Buchsenkörper (1) zur Verbindung mit dem Buchsenkörper (1) und
- Einbringen der vertikalen Vorsprünge (4) des Buchsenkörpers (1) in die Ausnehmung (8) an dem Rohrendabschnitt (7),
**dadurch gekennzeichnet, dass**
der Rohrendabschnitt (7) derart gelocht wird, dass der Buchsenkörper (1) verdrehfest in der Ausnehmung (8) aufgenommen wird.

2. Verfahren nach Anspruch 1, **dadurch gekennzeichnet, dass** an zwei sich gegenüberliegenden Rohrendabschnitten (7) zeitgleich Ausnehmungen (8) hergestellt und anschließend jeweils die vertikalen Vorsprünge (4) eines Buchsenkörpers (1) eingebracht werden.

3. Verfahren nach einem oder mehrerer der vorherigen Ansprüche, **dadurch gekennzeichnet, dass** der Rohrendabschnitt (8) vor dem Lochen gequetscht wird.

4. Verfahren nach einem oder mehrerer der vorherigen Ansprüche, **dadurch gekennzeichnet, dass** die vertikalen Vorsprünge (3) innerhalb von bis zu 6 Sekunden, bevorzugt bis zu 5 Sekunden, besonders bevorzugt bis zu 4 Sekunden eingebracht werden.

5. Verfahren nach einem oder mehrerer der vorherigen Ansprüche, **dadurch gekennzeichnet, dass** die eingebrachten vertikalen Vorsprünge (3) durch einen dornartigen Stanzkörper (13) innerhalb der Ausnehmung (8) an dem Rohrendabschnitt (7) nietartig aufgeweitet werden.

6. Verfahren nach einem oder mehrerer der vorherigen Ansprüche, **dadurch gekennzeichnet, dass** der dornartige Stanzkörper (13) jeweils axial zu der Längsachse (LV) eines vertikalen Vorsprungs (3) bewegt wird.

7. Verfahren nach einem oder mehrerer der vorherigen Ansprüche, **dadurch gekennzeichnet, dass** die Rohrendabschnitte (7) derart gelocht werden, dass die Ausnehmungen (8) als die Rohrendabschnitte (7) durchdringende Öffnungen ausgebildet sind.

8. Buchsenkörper (1) mit
- einem Buchsenkörperbund (3),
- einer Buchsenöffnung (5) und
- an dem Buchsenkörperbund (3) anschließenden, senkrecht zu einer Buchsenöffnungsebene (15) ausgerichteten, vertikalen Vorsprüngen (3),
**dadurch gekennzeichnet, dass**
die vertikalen Vorsprünge (3) zur verdrehfesten Aufnahme des Buchsenkörpers (1) an einem gequetschten Rohrendabschnitt (7) eines Rohrkörpers (2) ausgebildet sind.

9. Buchsenkörper (1) nach Anspruch 8, **dadurch gekennzeichnet, dass** die Buchsenöffnung (5) koaxial zu einer senkrecht zur Buchsenöffnungsebene (15) verlaufenden Längsachse (LB) des Buchsenkörpers (1) angeordnet ist.

10. Buchsenkörper nach Anspruch 8 oder 9, **dadurch gekennzeichnet, dass** die Buchsenöffnung (5) ellipsenartig und konzentrisch zum Buchsenkörperbund (3) ausgebildet ist.

11. Buchsenkörper (1) nach einem oder mehrerer der Ansprüche 8-10, **dadurch gekennzeichnet, dass** die vertikalen Vorsprünge (4) parallel zur Längsachse (LB) und gegenüberliegend an der dem Buchsenkörperbund (3) auf einer senkrecht zur Längsachse (LB) verlaufenden, sich in der Buchsenöffnungsebene (15) erstreckenden Hauptachse (HA) der Buchsenöffnung (5) angeordnet sind.

12. Buchsenkörper (1) nach einem oder mehrerer der Ansprüche 8-11, **dadurch gekennzeichnet, dass** die vertikalen Vorsprünge (3) eine zylindrisch und/oder konisch ausgebildete Außenkontur (16) aufweisen.

13. Rohrkörper (2) mit mindestens einer auf einem gequetschten Rohrendabschnitt (7) angeordneten Ausnehmung (8),
**dadurch gekennzeichnet, dass**
- in der Ausnehmung (8) vertikale Vorsprünge (4) eines Buchsenkörpers (1) verdrehfest angeordnet sind und
- der Buchsenkörper (1) mit einem Buchsenkörperbund (3) an dem gequetschten Rohrendabschnitt (7) anliegt.
